# EUROPÄISCHE PATENTSCHRIFT

(11) **EP 1 230 759 B1**
(45) Veröffentlichungstag und Bekanntmachung des Hinweises auf die Patenterteilung: **24.08.2005**
(21) Anmeldenummer: 00981271.0
(22) Anmeldetag: 17.11.2000
(51) Int. Cl.: H04L 7/04, H04J 3/06, H04B 1/707

(54) **PROGRAMMIERBARE SYNCHRONISIEREINHEIT FÜR EINEN SIGNALEMPFÄNGER**
PROGRAMMABLE SYNCHRONIZATION UNIT FOR A SIGNAL RECEIVER
UNITE DE SYNCHRONISATION PROGRAMMABLE POUR UN RECEPTEUR DE SIGNAUX

(30) Priorität: 19.11.1999 DE 19955757
(43) Veröffentlichungstag der Anmeldung: 14.08.2002
(73) Patentinhaber: Infineon Technologies AG, 81669 München (DE)
(72) Erfinder: BECKER, Burkhard, 85737 Ismaning (DE); JUNG, Peter, 67697 Otterberg (DE); PLECHINGER, Joerg, 80469 München (DE); SCHNEIDER, Michael, 81541 München (DE); DOETSCH, Markus, 81539 München (DE); KELLA, Tideya, 80337 München (DE); SCHMIDT, Peter, 67158 Ellerstadt (DE); SIMON, Sven, 28209 Bremen (DE)
(74) Vertreter: Reinhard - Skuhra - Weise & Partner
(86) Internationale Anmeldenummer: PCT/EP2000/011479
(87) Internationale Veröffentlichungsnummer: WO 2001/037476

(56) Entgegenhaltungen:
- US-A- 4 894 842
- US-A- 5 509 036
- US-A- 5 680 421
- SWALES S C ET AL: "THE U.K. LINK PERSONAL COMMUNICATIONS PROGRAMME: DOWNLINK SYNCHRONISATION FOR A DS-CDMA FIELD TRIAL SYSTEM" PROCEEDINGS OF THE VEHICULAR TECHNOLOGY CONFERENCE,US,NEW YORK, IEEE, Bd. CONF. 45, 25. Juli 1995 (1995-07-25), Seiten 784-788, XP000551641 ISBN: 0-7803-2743-8

## Beschreibung

Die Erfindung betrifft eine programmierbare Synchronisiereinheit gemäß dem Oberbegriff des Patentanspruchs 1.

Eine Rahmensynchronisiereinheit entsprechend dem Oberbegriff des Patentanspruchs 1 ist aus DE 42 26 952 bekannt.

Analoge und digitale Mobilfunksysteme sind nach dem zellularen Prinzip aufgebaut, wobei jede Zelle durch eine Basisstation versorgt wird. Hauptvorteil der Zellenstruktur ist die Wiederverwendung gleicher HF-Kanäle und die Versorgung beliebig ausgedehnter Gebiete. Zwischen einer Basisstation und einer Mobilstation gibt es in der Regel mehrere mögliche Ausbreitungswege. Reflexion und Streuung von Wellen an Gebäuden, Bergen, Bäumen und anderen Hindernissen führen dazu, dass sich die Empfangssignale aus mehreren, im allgemeinen unterschiedlich starken und unterschiedlich verzögerten Komponenten zusammensetzen. Die einzelnen Wellen können sich entweder konstruktiv oder destruktiv überlagern, je nach dem, wie groß die relative Phasendifferenz zwischen den Wellen ist. Ein mobiler Empfänger, der sich von einem Ort zum anderen bewegt, durchfährt Gebiete mit ständig wechselnden Phasenrelationen zwischen den verschiedenen, einfallenden Wellen. Die Verzögerung der unterschiedlichen Signalkomponenten wird in dem Empfänger berechnet, so dass die verschiedenen Signalkomponenten mit einer sogenannten Rake-Schaltung zusammengesetzt werden können. Das digitale Empfangssignal besteht aus einer Vielzahl von Daten-Zeitrahmen, die wiederum in Daten-Zeitschlitze unterteilt sind. Die Daten-Zeitrahmen sowie die Daten-Zeitschlitze enthalten jeweils Synchronisierungs-Datensequenzen zu ihrer Erkennung durch den Empfänger. Mittels dieser im Empfangssignal enthaltenen Synchronisierungssequenzen kann sich der Empfänger auf das Empfangssignal synchronisieren und nach dessen Dekodierung die Datenverarbeitung des Empfangssignals vernehmen.

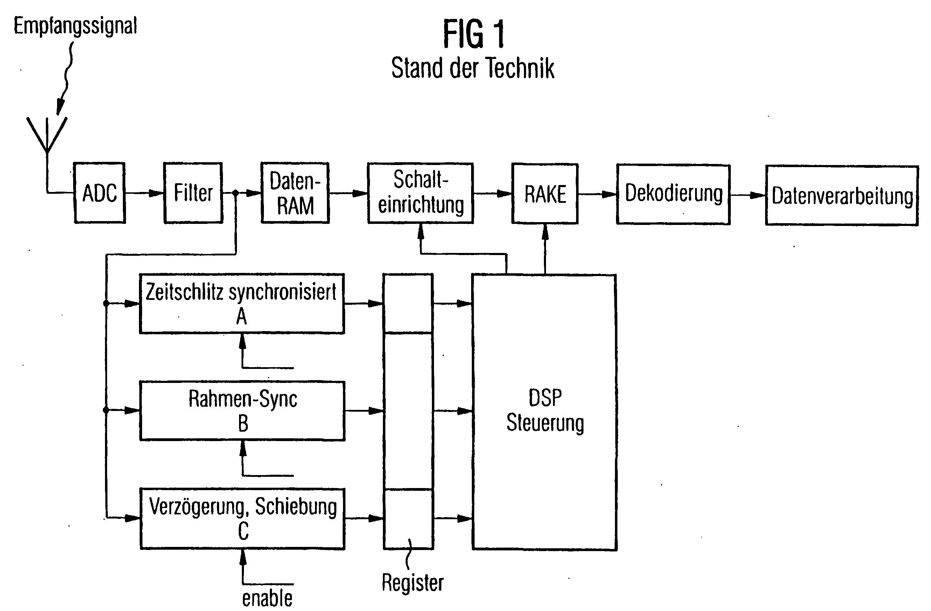

Figur 1 zeigt einen Empfänger zum Empfangen des Empfangssignals, beispielsweise eines QPSK-Signals nach dem Stand der Technik. Das analoge Empfangssignal wird einem Analog-Digital-Wandler zugeführt zur Umwandlung des Empfangssignals in digitale Empfangsdaten. Mittels eines nachgeschalteten Bandpassfilters wird der gewünschte Empfangskanal geschaltet. Die in dem Kanal empfangenen Daten werden in einem Datenspeicher, beispielsweise einem Daten-RAM zwischengespeichert. Gleichzeitig werden die Empfangsdaten verschiedenen sogenannten Such-Modulen zugeführt. Die Such-Module sind Hardware-Schaltungen, die verschiedene spezialisierte Aufgaben durchführen. Das Such-Modul A führt dabei die Zeitschlitzsynchronisation durch, das Such-Modul B führt die Zeitrahmensynchronisation durch und das Such-Modul C führt die Signalverzögerungsberechnung für die verschiedenen Signalkomponenten aufgrund der Mehr-Wege-Ausbreitung durch. Die ermittelten Werte werden in Registern zwischengespeichert und einer zentralen Steuerung des Empfängers, beispielsweise einem DSP-Prozessor zugeführt. Dieser schaltet über Steuerleitungen eine Schalteinrichtung und eine nachgeschaltete Rake-Schaltung in Abhängigkeit von den aufgefunden Synchronisationssignalsequenzen und den berechneten Signalverzögerungen. Die in den Zeitschlitzen enthaltene Empfangsdaten werden in einer Dekodiereinrichtung dekodiert und der weiteren Datenverarbeitung zugeführt.

Die durch die Such-Module A, B durchgeführten Synchronisationsprozeduren bzw. Zellenaufsuch-Prozeduren sowie die Signalverzögerungsberechnung der Empfangskanäle durch das Such-Modul C erfolgen durch nicht-kohärente oder kohärente Korrelation der Empfangsdaten mit vorbestimmten Korrelationsdatensequenzen, die durch den jeweiligen Mobilfunkstandard vorgegeben sind. Die Korrelierung der Empfangsdaten mit den Korrelationsdatensequenzen wird dabei mittels einfacher arithmetischer Operationen wie Bildung von Zweier-Komplementen, logischer Verknüpfung von Daten, Akkumulieren einer Vielzahl von korrelierten Werten, Quadrieren von Datenwerten und dergleichen durchgeführt.

Die entsprechend dem jeweiligen Standard durch Schaltungsbauelemente implementierten Such-Module A, B, C sind schaltungstechnisch komplex und gegenüber Änderungen von Vorgaben durch den Mobilfunkstandard völlig unflexibel. Die schaltungstechnische Implementierung der Such-Module durch Hardware-Bauelemente benötigt darüber hinaus viel Platz. Dadurch wird die Miniaturisierung des Empfängers, die insbesondere bei den Mobilfunkempfängern wünschenswert ist, behindert. Der Hauptnachteil der Verwendung von verschiedenen Hardware-Such-Modulen A, B, C zur Vornahme verschiedener Aufgaben bei der Empfangssignalsynchronisation sowie der Signal-Verzögerungsberechnung aufgrund von Mehr-Wege-Ausbreitung besteht darin, daß selbst geringfügigste Änderungen der durch den Standard gesetzten Vorgaben dazu führen, daß die implementierten Such-Module A, B, C nicht mehr verwendbar sind.

Es ist daher die Aufgabe der vorliegenden Erfindung eine Synchronisiereinheit für einen Signalempfänger zu schaffen, die zur Durchführung verschiedener Synchronisiervorgänge programmierbar ist.

Diese Aufgabe wird erfindungsgemäß durch eine programmierbare Synchronisiereinheit mit den im Patentanspruch 1 angegebenen Merkmalen gelöst.

Die erfindungsgemäße programmierbare Synchronisiereinheit bietet überdies den Vorteil, daß Flächenverbrauch gegenüber den bisherigen Such-Modulen nach dem Stand der Technik stark verringert ist.

Ein weiterer Vorteil der programmierbaren Synchronisiereinheit gemäß der Erfindung besteht darin, daß die schaltungstechnische Komplexität vermindert ist.

Dadurch wird zusätzlich die Fehleranfälligkeit verringert und der Herstellungsprozess zur Herstellung einer integrierten, programmierbaren Synchronisiereinheit gemäß der Erfindung erheblich vereinfacht.

Die Erfindung schafft eine programmierbare Synchronisiereinheit für einen Signalempfänger mit
einem Empfangs-Datenspeicher zum Zwischenspeichern von Empfangsdaten,
einem Korrelationswert-Datenspeicher zum Abspeichern von Korrelationswerten,
einem Datenpfad zur Korrelation der Empfangsdaten mit den abgespeicherten Korrelationswerten,
einem Ergebnis-Datenspeicher zum Zwischenspeichern der durch den Datenpfad mit den Korrelationswerten korrelierten Empfangsdaten, und mit
einer Steuereinheit zur Adressierung des Datenspeichers, des Ergebnis-Datenspeichers und des Korrelationswert-Datenspeichers und zur Steuerung des Datenpfades in Abhängigkeit von einem in einem Programmspeicher abgespeicherten aufrufbaren Synchronisationsprogramm.
Gemäß einer bevorzugten Weiterbildung der erfindungsgemäßen programmierbaren Synchronisiereinheit ist der Ergebnis-Datenspeicher mit einem Spitzen-Detektor verbunden.

Vorzugsweise weist die Steuereinheit für den Datenspeicher, den Ergebnis-Datenspeicher sowie den Korrelationswert-Datenspeicher jeweils einen eigenen Adressengenerator auf.

Der Programmspeicher ist bei einer bevorzugten Ausführungsform mit einem Konfigurationsregister verbunden, in das ein Aufrufbefehl zum Aufrufen eines Synchronisationsprogramms einschreibbar ist.

Die Steuerbefehle eines aufgerufenen Synchronisationsprogramms werden vorzugsweise nacheinander in ein Befehlsregister eingeschrieben, das in der Steuereinheit enthalten ist.

Bei einer weiteren bevorzugten Ausführungsform weist der Datenpfad mindestens ein Einleseregister und mehrere hintereinander geschaltete Berechnungsstufen auf.

Bei einer-bevorzugten Weiterbildung umfassen die abgespeicherten Synchronisationsprogramme ein Empfangsdaten-Zeitschlitz-Synchronisationsprogramm, ein Empfangsdaten-Zeitrahmen-Synchronisationsprogramm, mindestens ein Signalverzögerungs-Berechnungsprogramm sowie ein Verwürfelungs-Code-Identifikationsprogramm.

Dem Korrelationswert-Datenspeicher ist vorzugsweise ein Code-Generator zur Bildung eines Korrelationswert-Codes in Abhängigkeit von den adressierten Korrelationswerten nachgeschaltet.

Bei einer weiteren bevorzugten Ausbildung der erfindungsgemäßen Synchronisiereinheit sind die korrelierten Empfangsdaten aus dem Ergebnis-Datenspeicher über Rückkoppelleitungen in den Datenpfad rückkoppelbar.

Der Spitzen-Detektor ist vorzugsweise mit einer zentralen Steuereinheit des Signalempfängers verbunden, die eine dem Empfangsdatenspeicher nachgeschaltete Schalteinrichtung und eine Rake-Schaltung in Abhängigkeit von dem durch den Spitzen-Detektor erfassten Spitzenwert ansteuert.

Im Weiteren wird eine bevorzugte Ausführungsform der erfindungsgemäßen Synchronisiereinheit zur Erläuterung erfindungswesentlicher Merkmale beschrieben.

Es zeigen:
- Fig.1: einen Signalempfänger nach dem Stand der Technik;
- Fig.2: einen Signalempfänger mit der erfindungsgemäßen programmierbaren Synchronisiereinheit;
- Fig.3: die erfindungsgemäße programmierbare Synchronisiereinheit im Detail.

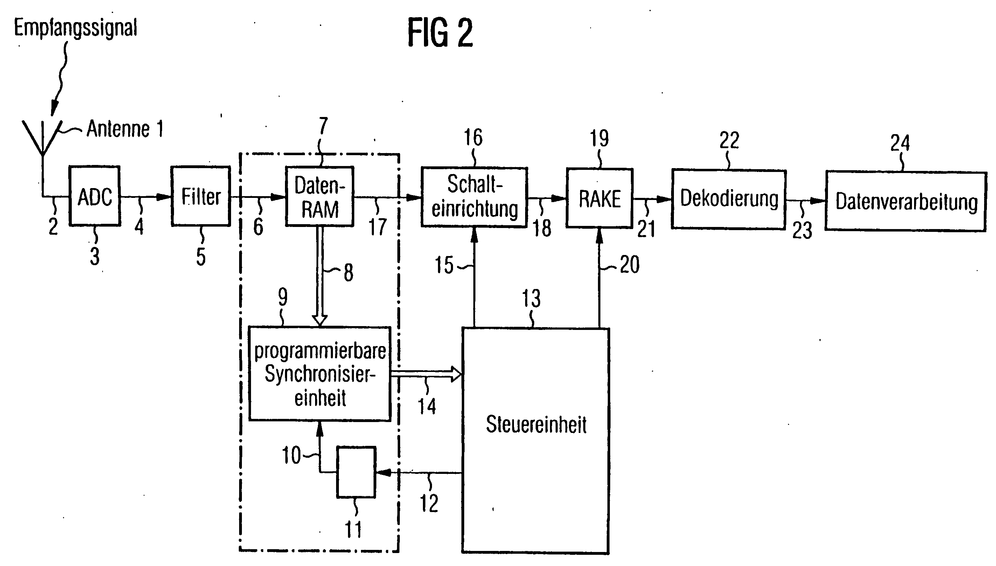

Wie man aus Figur 2 entnehmen kann, wird bei dem Empfänger, der die erfindungsgemäße programmierbare Synchronisiereinheit aufweist, ein Empfangssignal, beispielsweise ein QPSK-Empfangssignal über eine Antenne 1 empfangen. Das Empfangssignal wird über eine Leitung 2 einem Analog-Digital-Wandler 3 zur Umwandlung des empfangenen Analogsignals in digitale Empfangsdaten zugeführt. Die digitalen Empfangsdaten werden über eine Datenleitung 4 einem Bandpassfilter 5 zur Bandbegrenzung zugeführt. Das Bandpassfilter 5 ist zur Kanalauswahl schaltbar. Die Empfangsdaten des zugeschalteten Kanals werden über eine Datenleitung 6 in einen Empfangsdatenspeicher 7 eingeschrieben. Der Empfangsdatenspeicher 7 ist beispielsweise ein RAM-Speicher. Der Empfangs-Datenspeicher 7 dient zum Zwischenspeichern der digitalen Empfangsdaten des zugeschalteten Kanals.

Der Empfangsdatenspeicher 7 ist über Ausleseleitungen 8 mit der erfindungsgemäßen programmierbaren Synchronisiereinheit 9 verbunden. Die programmierbare Synchronisiereinheit 9 ist über Konfigurationsleitungen 10 an ein Konfigurationsregister 11 angeschlossen. Das Konfigurationsregister 11 ist seinerseits über Leitungen 12 mit einer zentralen Steuereinheit 13 des Empfängers, beispielsweise einem DSP-Prozessor, verbunden. Die zentrale Steuereinheit 13 schreibt über die Leitungen 12 einen Synchronisations-Programm-Aufrufbefehl in das Konfigurationsregister 11 ein. Entsprechend dem in das Konfigurationsregister eingeschriebenen Synchronisations-Programm-Aufrufbefehl werden in der programmierbaren Synchronisiereinheit 9 verschiedene Synchronisationsprogramme aufgerufen. Die programmierbare Synchronisiereinheit 9 ist über Ausgabeleitungen 14 mit der zentralen Steuereinheit 13 verbunden. Die Steuereinheit 13 steuert über eine Steuerleitung 15 eine Schalteinrichtung 16, die eingangsseitig über Datenleitungen 17 mit dem Empfangsdatenspeicher 7 verbunden ist. Ausgangsseitig ist die Schaltungseinrichtung 16 über Datenleitungen 18 an eine Rake-Schaltung 19 angeschlossen, die über Steuerleitungen 20 von der zentralen Steuereinheit 13 gesteuert wird. Die Rake-Schaltung 19 setzt die verschiedenen Signalkomponenten des Empfangssignals, die aufgrund der Mehr-Wege-Ausbreitung entstanden sind, entsprechend den durch die programmierbare Synchronisiereinheit 9 ermittelten Signalerzögerungszeiten wieder zusammen. Das durch die Rake-Schaltung 19 gebildete zusammengesetzte Empfangsdatensignal gelangt über eine Datenleitung 21 zu einer Dekodierschaltung 22. Die Dekodierschaltung 22 dekodiert das Empfangsdatensignal und gibt das dekodierte Empfangsdatensignal über eine Leitung 23 an eine nachgeschaltete Datenverarbeitungsschaltung 24 ab.

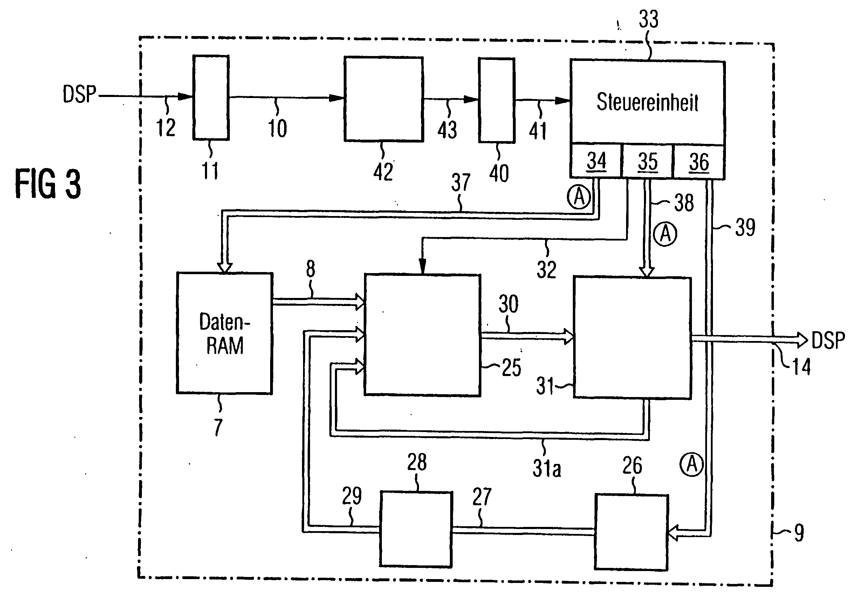

Die Figur 3 zeigt die erfindungsgemäße programmierbare Synchronisiereinheit 9 im Detail.

Der Empfangsdatenspeicher 7 ist über die Ausleseleitung 8 mit einem sogenannten Datenpfad 25 verbunden, der eingangseitig vorzugsweise mindestens ein Einleseregister aufweist. Der Datenpfad 25 der programmierbaren Synchronisiereinheit 9 weist vorzugsweise mehrere hintereinander geschaltete Berechnungsstufen auf. Der Datenpfad 25 funktioniert als eine Korrelationseinrichtung zur Korrelation der über die Ausleseleitungen 8 ausgelesenen Empfangsdaten mit Korrelationswerten, die in einem Korrelationswert-Datenspeicher 26 der programmierbaren Synchronisiereinheit 9 abgespeichert sind.

Der Korrelationswert-Datenspeicher 26 ist vorzugsweise ein Festwertspeicher, beispielsweise ein ROM-Speicher. Die in dem ROM-Speicher 26 abgespeicherten Korrelationswerte werden bei einer bevorzugten Ausführungsform über Leitungen 27 einem Code-Generator 28 zugeführt, der in Abhängigkeit von den in dem Korrelationswertspeicher 26 adressierten Korrelationswerten einen Korrelationswert-Code generiert, der über Datenleitungen 29 ebenfalls dem Datenpfad bzw. der Korrelationseinrichtung 25 zugeführt wird. Der Datenpfad 25 korreliert die an den Leitungen 8 anliegenden Empfangsdaten mit den an den Leitungen 29 anliegenden Korrelationswert-Codedaten.

Der Datenpfad 25 gibt die korrelierten Empfangsdaten über Leitungen 30 an einen Ergebnis-Datenspeicher 31 ab. Der Ergebnis-Datenspeicher 31 ist beispielsweise ein flüchtiger Speicher, insbesondere ein RAM. Der Ergebnis-Datenspeicher 31 ist über Rückkoppelleitungen 31a zum Rückkoppeln von Ergebnisdaten mit einem Einleseregister des Datenpfads 25 verbunden.

Die verschiedenen Berechnungsstufen des Datenpfades 25 sind über separate Steuerleitungen 32 durch eine Steuereinheit 33 der programmierbaren Synchronisiereinheit 9 ansteuerbar. Die Steuereinheit 33 weist ferner vorzugsweise verschiedene Adressengeneratoren 34, 35, 36 auf, wobei der erste Adressengenerator 34 zur Adressierung des Empfangsdatenspeichers 7 über Adressenleitungen 37, der zweite Adressengenerator 35 zur Adressierung des Ergebnis-Datenspeichers 31 über Adressenleitungen 38 und der Adressengenerator 36 zur Adressierung des Korrelationswert-Datenspeichers 26 über Adressenleitungen 39 dient. Die Steuereinheit 33 führt die Adressierung des Datenempfangsspeichers 7, des Ergebnis-Datenspeichers 31 sowie des Korrelationswertspeichers 26 und die Steuerung der verschiedenen Berechnungsstufen des Datenpfades 25 in Abhängigkeit von einem Steuerbefehl durch, der sich in einem Befehlsregister 40 befindet. Das Befehlsregister 40 ist über eine Befehlsausleseleitung 41 mit der Steuereinheit 33 verbunden. In das Befehlsregister 40 werden nacheinander verschiedene Steuerbefehle eines in einem Programmspeicher 42 abgespeicherten Synchronisationsprogramm über Leitungen 43 eingeschrieben. In dem Synchronisationsprogrammspeicher 42 sind verschiedene aufrufbare Synchronisationsprogramme abgespeichert, die jeweils mehrere Steuerbefehle enthalten. Der Programmspeicher 42 ist vorzugsweise ein ROM-Speicher. Die verschiedenen in dem Programmspeicher 42 befindlichen Synchronisationsprogramme werden über die Leitungen 10 durch das Konfigurationsregister 11 aufgerufen. Das Konfigurationsregister 11 nimmt verschiedene Synchronisationsprogramm-Aufrufbefehle, die von der zentralen Steuereinheit 13 stammen über die Steuerleitungen 12 auf.

Bei einer bevorzugten Ausführungsform kann die Steuereinheit 33 der programmierbaren Synchronisiereinheit 9 einen dem Ergebnis-Speicher 31 nachgeschalteten Spitzendetektor ansteuern. Alternativ dazu kann Spitzendetektion auch durch die zentrale Steuereinheit 13 selbst durchgeführt werden.

Die in dem Programmspeicher 42 abgespeicherten Synchronisationsprogramme umfassen alle für die Empfängersynchronisation notwendigen Befehle. In dem Programmspeicher 42 sind insbesondere ein Zeitschlitzsynchronisationsprogramm, ein Zeitrahmensynchronisationsprogramm sowie ein Verwürfelungs-Code-Identifikationsprogramm abgespeichert.

Ferner sind verschiedene Verzögerungs-Berechnungsprogramme mit verschiedener Genauigkeitstiefe in dem Programmspeicher 42 abgespeichert. Die berechnete Zeitverzögerung bildet die Grundlage zur Ansteuerung der Rake-Schaltung 19 durch die zentrale Steuereinheit 13.

Die Steuereinheit 33 steuert die einzelnen Berechnungsstufen des Datenpfades 25. Hierzu wählt sie beispielsweise verschiedene Register aus und aktiviert bzw. deaktiviert die verschiedenen Berechnungsstufen. Die verschiedenen Korrelationsprogramme, die in dem Programmspeicher 42 abgespeichert sind, können nacheinander durch die Steuereinheit 33 ausgeführt werden. Die Steuereinheit 33 führt die aufgerufenen Synchronisationsmikroprogramme durch, indem sie die Adresswerte des Datenempfangsspeichers 7, des Ergebnis-Speichers 31, sowie des Korrelationswertspeichers 26 lädt und inkrementiert, wobei die Steuereinheit 33 Schleifen-Zähleinrichtungen für die verschiedenen Mikroprozeduren aufweist.

Bei einer bevorzugten Ausführung ist der Korrelationswertspeicher 26 entsprechend den jeweiligen Empfangsdatenstandard austauschbar. Hierdurch ist es möglich, verschiedene Synchronisationserkennungsdatensequenzen für verschiedene Empfangsdatenstandards in der programmierbaren Synchronisiereinheit zu implementieren und so eine hohe Flexibilität beim Einsatz der erfindungsgemäßen Synchronisiereinheit 9 zu gewährleisten. Darüber hinaus ist es möglich, die in dem Programmspeicher 42 abgespeicherten Synchronisationsmikroprozeduren an die verschiedenen Anforderungen anzupassen, ohne die übrige Hardware-Struktur, insbesondere in dem Datenpfad 25 verändern zu müssen. Die erfindungsgemäße programmierbare Synchronisiereinheit 9, wie sie in Figur 3 gezeigt ist, weist somit eine relativ geringe schaltungstechnische Komplexität bei gleichzeitig hoher Flexibilität auf.

### Bezugszeichenliste

- 1: Antenne
- 2: Datenleitung
- 3: Analog-Digital-Wandler
- 4: Leitung
- 5: Bandpassfilter
- 6: Leitung
- 7: Empfangsdatenspeicher
- 8: Ausleseleitung
- 9: programmierbare Synchronisiereinheit
- 10: Leitungen
- 11: Konfigurationsregister
- 12: Steuerleitungen
- 13: zentrale Steuereinheit
- 14: Ausgabeleitungen
- 15: Steuerleitung
- 16: Schalteinrichtung
- 17: Leitungen
- 18: Leitungen
- 19: Rake-Schaltung
- 20: Steuerleitungen
- 21: Leitungen
- 22: Dekodierschaltung
- 23: Leitungen
- 24: Datenverarbeitungsschaltung
- 25: Datenpfad
- 26: Korrelationswert-Datenspeicher
- 27: Leitungen
- 28: Code-Generator
- 29: Leitungen
- 30: Datenausgabeleitungen
- 31: Ergebnis-Datenspeicher
- 31a: Rückkoppelleitungen
- 32: Datenpfadsteuerleitungen
- 33: Steuereinheit
- 34, 35, 36: Adressengeneratoren
- 37, 38, 39: Adressenleitungen
- 40: Befehlsregister
- 41: Leitungen
- 42: Programmspeicher
- 43: Leitungen

## Patentansprüche

1. Programmierbare Synchronisiereinheit für einen Signalempfänger mit
einem Empfangs-Datenspeicher (7) zum Zwischenspeichern von Empfangsdaten;
einem Korrelationswert-Datenspeicher (26) zum Abspeichern von Korrelationswerten;
einem steuerbaren Datenpfad (25) zur Korrelation der Empfangsdaten mit den Korrelationswerten;
einem Ergebnis-Datenspeicher (31) zum Zwischenspeichern der durch den Datenpfad (25) mit den Korrelationswerten korrelierten Empfangsdaten; und mit
einer Steuereinheit (33) zur Adressierung des Empfangsdatenspeichers (7), des Ergebnis-Datenspeichers (31) und des Korrelationswert-Datenspeichers (26);
**gekennzeichnet dadurch,**
**dass** die Steuereinheit (33) zur Steuerung des Datenpfades (25) in Abhängigkeit von einem aufgerufenen Synchronisationsprogramm vorgesehen ist, das in einem Programmspeicher (42) abgespeichert ist, wobei in dem Programmspeicher (42) verschiedene Synchronisierungsprogramme zur Synchronisation des Signalempfängers abgespeichert sind.

2. Synchronisiereinheit nach Anspruch 1,
**dadurch gekennzeichnet,**
**dass** der Ergebnis-Datenspeicher (31) mit einem Spitzendetektor verbunden ist.

3. Synchronisiereinheit nach Anspruch 1 oder 2,
**dadurch gekennzeichnet,**
**dass** die Steuereinheit (33) für den Empfangsdatenspeicher (7), den Ergebnisdatenspeicher (31) und den Korrelationswert-Datenspeicher (26) jeweils einen Adressengenerator (34, 35, 36) aufweist.

4. Synchronisiereinheit nach einem der vorangehenden Ansprüche,
**dadurch gekennzeichnet,**
**dass** der Programmspeicher (42) mit einem Konfigurationsregister (11) verbunden ist, in das ein Befehl zum Aufrufen eines Synchronisationsprogramms einschreibbar ist.

5. Synchronisiereinheit nach einem der vorhergenannten Ansprüche;
**dadurch gekennzeichnet,**
**dass** ein Befehlsregister (40) vorgesehen ist und dass die Steuereinheit (33) derart ausgelegt ist,
**dass** die Steuerbefehle eines aufgerufenen Steuerprogramms nacheinander im Befehlregister (40) ein geschrieben werden.

6. Synchronisiereinheit nach einem der vorangehenden Ansprüche,
**dadurch gekennzeichnet,**
**dass** der Datenpfad (25) mindestens ein Einleseregister und mehrere hintereinander geschaltete Berechnungsstufen aufweist.

7. Synchronisiereinheit nach einem der vorangehenden Ansprüche,
**dadurch gekennzeichnet,**
**dass** die abgespeicherten Synchronisationsprogramme ein Empfangsdaten-Zeitschlitz-Synchronisationsprogramm, ein Empfangsdaten-Zeitrahmen-Synchronisationsprogramm, mindestens ein Signalverzögerungs-Berechnungsprogramm sowie ein Verwürfelungs-Identifikationsprogramm umfassen.

8. Synchronisiereinheit nach einem der vorangehenden Ansprüche,
**dadurch gekennzeichnet,**
**dass** dem Korrelationswert-Datenspeicher (26) ein Codegenerator (28) zur Bildung eines Korrelationswert-Codes in Abhängigkeit von dem adressierten Korrelationswert nachgeschaltet ist.

9. Synchronisiereinheit nach einem der vorangehenden Ansprüche,
**dadurch gekennzeichnet,**
**dass** Rückkoppelleitungen (31a) vorgesehen sind über die die korrelierten Empfangsdaten aus dem Ergebnis-Datenspeicher (31) in den Datenpfad (25) rückkoppelbar sind.

## Claims

1. A programmable synchronization unit for a signal receiver comprising
a received data memory (7) for buffering received data;
a correlation value data memory (26) for storing correlation values;
a controllable data path (25) for correlating said received data with said correlation values;
a result data memory (31) for buffering said received data correlated by the data path (25) with said correlation values; and
a control unit (33) for addressing said received data memory (7), said result data memory (31), and said correlation value data memory (26);
**characterized in that**
said control unit (33) is arranged for controlling the data path (25) depending on a called synchronization program, stored in a program memory (42) wherein different synchronization programs for synchronizing said signal receiver are stored in said program memory (42).

2. The synchronization unit according to claim 1,
**characterized in that**,
the received data memory device (31) is connected to a peak detector.

3. The synchronization unit according to claim 1 or 2,
**characterized in that**,
the control unit (33) comprises a respective address generator (34, 35, 36) for each of the received data memory (7), the result data memory (31), and the correlation value data memory (26).

4. The synchronization unit according to any of the preceding claims,
**characterized in that**,
the program memory (42) is connected to a configuration register (11) into which an instruction for calling a synchronization program is writable.

5. The synchronization unit according to any of the preceding claims,
**characterized in that**,
an instruction register (40) is provided and the control unit (33) is arranged such that the control instructions of a called control program are sequentially written into said instruction register (40).

6. The synchronization unit according to any of the preceding claims,
**characterized in that**,
the data path (25) comprises at least an read-in register and several sequentially connected computation stages.

7. The synchronization unit according to any of the preceding claims,
**characterized in that**,
the stored synchronization program includes a received data time slit synchronization program, a received data time frame synchronization program, at least one signal delay calculation program and a scrambling identification program.

8. The synchronization unit according to any preceding claims,
**characterized in that**,
a code generator (26) for forming a correlation value code in dependence of the addressed correlation value is connected downstream of the correlation value data memory (26).

9. The synchronization unit according to any of the preceding claims,
**characterized in that**,
feedback lines (31a) are provided via which said correlated received data from the result data memory (31) can be fed back into the data path (25).

## Revendications

1. Unité de synchronisation programmable pour un récepteur de signaux comprenant :
une mémoire de données de réception (7) pour mémoriser temporairement des données de réception ;
une mémoire de données de valeur de corrélation (26) pour mémoriser des valeurs de corrélation ;
un chemin de données (25) pouvant être commandé pour la corrélation des données de réception avec les valeurs de corrélation ;
une mémoire de données de résultat (31) pour mémoriser temporairement les données de réception corrélées avec les valeurs de corrélations par le chemin de données (25) ; et comprenant
une unité de commande (33) pour l'adressage de la mémoire de données de réception (7), de la mémoire de données de résultat (31) et de la mémoire de données de valeur de corrélation (26) ;
**caractérisé en ce que**,
l'unité de commande (33) est prévue pour la commande du chemin de données (25) en fonction d'un programme de synchronisation appelé qui est stocké dans une mémoire de programmes (42) dans laquelle différents programmes de synchronisation pour la synchronisation du récepteur de signaux sont mémorisés.

2. Unité de synchronisation selon la revendication 1,
**caractérisée en ce que**,
la mémoire de données de résultat (31) est reliée avec un détecteur de crête.

3. Unité de synchronisation selon la revendication 1 ou 2,
**caractérisé en ce que**,
pour la mémoire de données de réception (7), la mémoire de données de résultat (31) et la mémoire de données de valeur de corrélation (26), l'unité de commande (33) comprend à chaque fois un générateur d'adresses (34, 35, 36).

4. Unité de synchronisation selon l'une quelconque des revendications précédentes,
**caractérisée en ce que**,
la mémoire de programmes (42) est reliée avec un registre de configuration (11), dans lequel une instruction d'appel d'un programme de synchronisation peut être écrite.

5. Unité de synchronisation selon l'une quelconque des revendications précédentes,
**caractérisée en ce que**,
un registre de commandes (40) est prévu et que l'unité de commande (33) est conçue de telle façon que les instructions de commande d'un programme de commande appelé sont écrites l'une après l'autre dans le registre de commandes (40).

6. Unité de synchronisation selon l'une quelconque des revendications précédentes,
**caractérisée en ce que**,
le chemin de données (25) comprend au moins un registre d'entrée et plusieurs niveaux de calcul reliés les uns derrière les autres.

7. Unité de synchronisation selon l'une quelconque des revendications précédentes,
**caractérisée en ce que**,
les programmes de synchronisation mémorisés comprennent un programme de synchronisation de créneaux temporels de données de réception, un programme de synchronisation de trames temporelles de données de réception, au moins un programme de calcul de retard de signal ainsi qu'un programme d'identification de cryptophonie.

8. Unité de synchronisation selon l'une quelconque des revendications précédentes,
**caractérisée en ce que**,
un générateur de codes (28), pour la formation d'un code de valeur de corrélation en fonction de la valeur de corrélation adressée, est placé en aval de la mémoire de données de valeur de corrélation (26).

9. Unité de synchronisation selon l'une quelconque des revendications précédentes,
**caractérisée en ce que**,
des lignes de rétroaction (31 a) sont prévues par lesquelles les données de réception corrélées peuvent être réinjectées dans le chemin de données (25) à partir de la mémoire de données de résultat (31).
